# EUROPEAN PATENT APPLICATION

(11) **EP 4 428 181 A1**
(43) Date of publication of application: **11.09.2024**
(21) Application number: 23895572.8
(22) Date of filing: 05.12.2023
(51) Int. Cl.: C08J 3/28, C08J 3/12

(54) **METHOD FOR PRODUCING POLYTETRAFLUOROETHYLENE MICROPOWDER, AND POLYTETRAFLUOROETHYLENE MICROPOWDER**

(30) Priority: 05.12.2022 JP 2022194218
(71) Applicant: Daikin Industries, Ltd., Osaka-shi, Osaka 530-0001 (JP)
(72) Inventor: TSUJI, Masayuki, Osaka-Shi, Osaka 530-0001 (JP); KITAGAWA, Yuki, Osaka-Shi, Osaka 530-0001 (JP); MIYAKE, Ikuo, Osaka-Shi, Osaka 530-0001 (JP); SHIMIZU, Ayaka, Osaka-Shi, Osaka 530-0001 (JP); MASUDA, Eiji, Osaka-Shi, Osaka 530-0001 (JP); HIGASHI, Chisato, Osaka-Shi, Osaka 530-0001 (JP); KUBOCHI, Masaki, Osaka-Shi, Osaka 530-0001 (JP); KAWAHARA, Kazuya, Osaka-Shi, Osaka 530-0001 (JP); HAMANO, Kazuhiro, Osaka-Shi, Osaka 530-0001 (JP)
(74) Representative: Hoffmann Eitle
(86) International application number: PCT/JP2023/043545
(87) International publication number: WO 2024/122551

(57) **Abstract**

The present invention provides a method for producing a polytetrafluoroethylene micropowder that enables a clean working environment as well as a polytetrafluoroethylene powder. The present invention relates to a method for producing a polytetrafluoroethylene micropowder, the method including irradiating a polytetrafluoroethylene powder having an average particle size of 700 um or greater with ionizing radiation to provide a polytetrafluoroethylene micropowder having an average particle size of 20 um or smaller.

## Description

### TECHNICAL FIELD

The disclosure relates to methods for producing a polytetrafluoroethylene micropowder and polytetrafluoroethylene powder.

### BACKGROUND ART

A fluororesin pulverization method is known in which a fluororesin such as polytetrafluoroethylene (PTFE) is irradiated with ionizing radiation and then pulverized (for example, see Patent Literature 1).

### CITATION LIST

### - Patent Literature

Patent Literature 1: JP H02-139204 A

### SUMMARY OF INVENTION

### - Technical Problem

Patent Literature 1 discloses that a fluororesin to be irradiated with ionizing radiation "may be in any form such as a powdery, particulate, fibrous, or preformed form", but fails to sufficiently examine this point.

The disclosure aims to provide a method for producing a polytetrafluoroethylene micropowder that enables a clean working environment as well as a polytetrafluoroethylene powder.

### - Solution to Problem

The disclosure (1) relates to a method for producing a polytetrafluoroethylene micropowder, the method including irradiating a polytetrafluoroethylene powder having an average particle size of 700 um or greater with ionizing radiation to provide a polytetrafluoroethylene micropowder having an average particle size of 20 um or smaller (hereinafter, also referred to as the "production method of the disclosure").

The disclosure (2) relates to the method for producing a polytetrafluoroethylene micropowder according to the disclosure (1), wherein the polytetrafluoroethylene micropowder has a melt viscosity at 380°C of 1 × 10¹ to 7 × 10⁵ Pa·s.

The disclosure (3) relates to the method for producing a polytetrafluoroethylene micropowder according to the disclosure (1) or (2), wherein the polytetrafluoroethylene powder has an apparent density of 0.40 g/ml or lower.

The disclosure (4) relates to the method for producing a polytetrafluoroethylene micropowder according to any one of the disclosures (1) to (3), wherein the polytetrafluoroethylene powder is obtained by sieving with a sieve having an opening of 700 um to 2 mm.

The disclosure (5) relates to the method for producing a polytetrafluoroethylene micropowder according to any one of the disclosures (1) to (4), wherein the polytetrafluoroethylene powder has a rise sensory index of 2 or lower, where the rise sensory index is determined in a rise sensory test performed under the following conditions: (rise sensory test)
the polytetrafluoroethylene powder is scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison is visually performed by three persons and is indexed (rise sensory index) in the following manner:
   1: Clearly no powder rise is observed
      (a state in which no powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container);
   2: Powder rise occurs but in a slight amount
      (a state in which powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container, but in a slight amount such that the rising powder is not visually observed in five seconds);
   3: Powder rise occurs and powder is possibly to adhere to clothes of worker
      (a state in which powdery polytetrafluoroethylene powder particles are visually observed about 5 cm above a top surface (a portion at a height of 32 cm) of the 18-L plastic container (32 cm tall) within five seconds immediately after completion of the dropping of the polytetrafluoroethylene powder into the plastic container, and in which slight deposition of fine powder of the polytetrafluoroethylene powder is observed on a floor where the plastic is placed; the polytetrafluoroethylene powder is possibly to adhere to clothes or shoes of a worker; still, the deposition is in a slight amount that is difficult to quantify);
   4: Clearly powder rise is observed
      (a state in which powdery polytetrafluoroethylene powder particles are visually observed about 10 cm above a top surface (a portion at a height of 32 cm) of the 18-L plastic container (32 cm tall) within five seconds immediately after completion of the dropping of the polytetrafluoroethylene powder into the plastic container).

The disclosure (6) relates to a polytetrafluoroethylene powder having an apparent density of 0.40 g/ml or lower and an average particle size of 700 um or greater (hereinafter, also referred to as the "first PTFE powder of the disclosure").

The disclosure (7) relates to the polytetrafluoroethylene powder according to the disclosure (6), wherein the polytetrafluoroethylene powder has a rise sensory index of 2 or lower, where the rise sensory index is determined in a rise sensory test performed under the following conditions: (rise sensory test)
the polytetrafluoroethylene powder is scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison is visually performed by three persons and is indexed (rise sensory index) in the following manner:
1: Clearly no powder rise is observed
   (a state in which no powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container);
2: Powder rise occurs but in a slight amount
   (a state in which powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container, but in a slight amount such that the rising powder is not visually observed in five seconds);
3: Powder rise occurs and powder is possibly to adhere to clothes of worker
   (a state in which powdery polytetrafluoroethylene powder particles are visually observed about 5 cm above a top surface (a portion at a height of 32 cm) of the 18-L plastic container (32 cm tall) within five seconds immediately after completion of the dropping of the polytetrafluoroethylene powder into the plastic container, and in which slight deposition of fine powder of the polytetrafluoroethylene powder is observed on a floor where the plastic is placed; the polytetrafluoroethylene powder is possibly to adhere to clothes or shoes of a worker; still, the deposition is in a slight amount that is difficult to quantify);
4: Clearly powder rise is observed
   (a state in which powdery polytetrafluoroethylene powder particles are visually observed about 10 cm above a top surface (a portion at a height of 32 cm) of the 18-L plastic container (32 cm tall) within five seconds immediately after completion of the dropping of the polytetrafluoroethylene powder into the plastic container).

The disclosure (8) relates to a polytetrafluoroethylene powder having an average particle size of 700 µm or greater and including 3% by weight or less of a 42 mesh or smaller fine powder (hereinafter, also referred to as the "second PTFE powder of the disclosure").

The disclosure (9) relates to the polytetrafluoroethylene powder according to the disclosure (8), wherein the polytetrafluoroethylene powder has an apparent density of 0.40 g/ml or lower.

The disclosure (10) relates to the polytetrafluoroethylene powder according to the disclosure (8) or (9), which is a polytetrafluoroethylene fine powder.

The disclosure (11) relates to a polytetrafluoroethylene powder having an average particle size of 700 um or greater, which is to be used as a material of a polytetrafluoroethylene micropowder (hereinafter, also referred to as the third PTFE powder of the disclosure).

### - Advantageous Effects of Invention

The disclosure can provide a method for producing a polytetrafluoroethylene micropowder that enables a clean working environment as well as a polytetrafluoroethylene powder.

### DESCRIPTION OF EMBODIMENTS

The "organic group" herein means a group containing at least one carbon atom or a group formed by removing one hydrogen atom from an organic compound.

Examples of this "organic group" include
an alkyl group optionally containing at least one substituent,
an alkenyl group optionally containing at least one substituent,
an alkynyl group optionally containing at least one substituent,
a cycloalkyl group optionally containing at least one substituent,
a cycloalkenyl group optionally containing at least one substituent,
a cycloalkadienyl group optionally containing at least one substituent,
an aryl group optionally containing at least one substituent,
an aralkyl group optionally containing at least one substituent,
a non-aromatic heterocyclic group optionally containing at least one substituent,
a heteroaryl group optionally containing at least one substituent,
a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-,
wherein the Ra groups are each independently
an alkyl group optionally containing at least one substituent,
an alkenyl group optionally containing at least one substituent,
an alkynyl group optionally containing at least one substituent,
a cycloalkyl group optionally containing at least one substituent,
a cycloalkenyl group optionally containing at least one substituent,
a cycloalkadienyl group optionally containing at least one substituent,
an aryl group optionally containing at least one substituent,
an aralkyl group optionally containing at least one substituent,
a non-aromatic heterocyclic group optionally containing at least one substituent, or
a heteroaryl group optionally containing at least one substituent; and
the Rb groups are each independently H or an alkyl group optionally containing at least one substituent.

The organic group is preferably an alkyl group optionally containing at least one substituent.

The disclosure will be specifically described hereinbelow.

### <Production method of the disclosure>

The production method of the disclosure includes irradiating a PTFE powder having an average particle size of 700 um or greater with ionizing radiation to provide a PTFE micropowder having an average particle size of 20 um or smaller.

As in the method disclosed in Patent Literature 1, irradiating a PTFE powder with ionizing radiation requires packing the PTFE powder into a container exclusive to radiation with ionizing radiation. A PTFE powder commonly used as a material of PTFE micropowder has an average particle size of 300 to 650 um, but a PTFE powder having an average particle size within this range may rise when packed into a container, causing impaired working environment. In contrast, the PTFE powder to be irradiated with ionizing radiation in the production method of the disclosure has an average particle size of 700 um or greater, which can reduce rise of the PTFE powder and enables a clean working environment.

Comparing the PTFE micropowder obtained by the production method of the disclosure and a PTFE micropowder produced from a PTFE powder having an average particle size of 300 to 650 um shows no substantial difference in terms of characteristics. Therefore, the PTFE micropowder obtained by the production method of the disclosure can be applied to uses similar to those of conventional PTFE micropowder.

The PTFE powder can be roughly classified into two, those called PTFE fine powder and those called PTFE molding powder. The PTFE fine powder is known as material for high performance products such as special porous films, tubes, and coating layers of electric wires. To reduce generation of voids, these high performance products are commonly formed using a PTFE fine powder with coarse particles having an average particle size of 700 um or greater removed therefrom. In other words, a PTFE fine powder having an average particle size of 700 um or greater has a low commercial value. The production method of the disclosure is also advantageous in that it enables effective use of a PTFE fine powder having an average particle size of 700 um or greater.

The PTFE molding powder is known as material for high performance products such as special packings as well as special rods, tubes, and sheets. To reduce generation of voids, these high performance products are commonly formed using a PTFE molding powder with coarse particles removed therefrom. The size of such coarse particles varies depending on the type of the product to be formed from a PTFE molding powder and is therefore difficult to define with a single meaning.

The average particle size of the PTFE powder is 700 um or greater, preferably 850 um or greater, more preferably 900 um or greater, further preferably 940 um or greater, particularly preferably 1000 um or greater. The upper limit is preferably, but not limited to, 10000 um or smaller.

The PTFE powder at least has an average particle size of 700 um or greater, and may include a fine powder having an average particle size of smaller than 700 um.

The average particle size of the PTFE powder can be measured by the following method.

First, 10, 20, 32, 48, 60, and 83 mesh (mesh per inch) standard sieves are stacked in the stated order from top to bottom. PTFE powder is fed onto the 10 mesh sieve and the sieves are vibrated so that finer particles of the PTFE powder drop successively to the lower sieves. The proportions of the PTFE powder residues on the respective sieves are determined in percentage. On lognormal probability paper, the cumulative percentages of the remaining proportions (vertical axis) are marked relative to the openings of the sieves (horizontal axis). These points are connected by straight lines and the particle size corresponding to the proportion of 50% on these straight lines is determined. This value is defined as the average particle size.

The PTFE powder is obtainable by sieving with a sieve having an opening of 700 µm to 2 mm. Examples of this sieve include 8 to 24 mesh sieves. In terms of yield, an 8 mesh or 10 mesh sieve is preferred.

The opening of the sieve herein refers to the nominal size in JIS Z8801-1:2019.

The PTFE powder preferably includes a 42 mesh or smaller (e.g., 48 mesh) fine powder in an amount of 3% by weight or less of the whole amount of the PTFE powder. A 42 mesh or smaller fine powder in an amount within this range relative to the whole amount of the PTFE powder can lead to better achievement of the effects of the disclosure. This amount is preferably 2.5% by weight or less, more preferably 2.0% by weight or less, still more preferably 1.5% by weight or less, particularly preferably 1.0% by weight or less of the whole amount of the PTFE powder.

The amount of the 42 mesh or smaller fine powder can be measured by the method described in the EXAMPLES to be described later, for example.

The "42 mesh or smaller fine powder" herein refers to fine powder that passes through a 42 mesh or smaller sieve when classified using this sieve.

The PTFE powder preferably has an apparent density of 0.25 g/ml or higher, more preferably 0.30 g/ml or higher, still more preferably 0.32 g/ml or higher, while preferably 0.40 g/ml or lower.

The apparent density of the PTFE powder is determined in conformity with JIS K6892.

The PTFE powder preferably has a standard specific gravity (SSG) of 2.130 to 2.280. The standard specific gravity is measured by the water displacement method in conformity with ASTM D792 using a sample molded in conformity with ASTM D4895-89.

The PTFE powder has a rise sensory index of preferably 2 or lower, more preferably 1, where the rise sensory index is determined in a rise sensory test performed under the following conditions. The PTFE powder having a rise sensory index, which is determined in the rise sensory test performed under the following conditions, within this range is less likely to rise and enables a clean working environment.

### (Rise sensory test)

The polytetrafluoroethylene powder is scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison is visually performed by three persons and is indexed (rise sensory index) in the following manner:
1: Clearly no powder rise is observed
   (a state in which no powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container);
2: Powder rise occurs but in a slight amount
   (a state in which powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container, but in a slight amount such that the rising powder is not visually observed in five seconds);
3: Powder rise occurs and powder is possibly to adhere to clothes of worker
   (a state in which powdery polytetrafluoroethylene powder particles are visually observed about 5 cm above a top surface (a portion at a height of 32 cm) of the 18-L plastic container (32 cm tall) within five seconds immediately after completion of the dropping of the polytetrafluoroethylene powder into the plastic container, and in which slight deposition of fine powder of the polytetrafluoroethylene powder is observed on a floor where the plastic is placed; the polytetrafluoroethylene powder is possibly to adhere to clothes or shoes of a worker; still, the deposition is in a slight amount that is difficult to quantify);
4: Clearly powder rise is observed
   (a state in which powdery polytetrafluoroethylene powder particles are visually observed about 10 cm above a top surface (a portion at a height of 32 cm) of the 18-L plastic container (32 cm tall) within five seconds immediately after completion of the dropping of the polytetrafluoroethylene powder into the plastic container).

PTFE of the PTFE powder may be a homopolymer of tetrafluoroethylene (TFE) or may be a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of a TFE unit and 1.0% by mass or less of a modifying monomer unit. The modified PTFE may consist only of a TFE unit and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, further more preferably 0.010% by mass. The upper limit of the amount of the modifying monomer unit is preferably 0.90% by mass, more preferably 0.50% by mass, still more preferably 0.40% by mass, further preferably 0.30% by mass, further more preferably 0.20% by mass, still further more preferably 0.15% by mass, particularly preferably 0.10% by mass.

The modifying monomer unit herein means a moiety that is part of the molecular structure of PTFE and is derived from a modifying monomer.

The amounts of the respective polymerized units described above can be calculated by appropriate combination of NMR, FT-IR, elemental analysis, and X-ray fluorescence analysis in accordance with the types of the monomers.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; (perfluoroalkyl)ethylene; and ethylene. One modifying monomer may be used, or multiple modifying monomers may be used.

Examples of the perfluorovinyl ether include, but are not limited to, unsaturated perfluoro compounds represented by the following formula (A):

CF₂=CF-ORf (A)

wherein Rf is a perfluoroorganic group. The "perfluoroorganic group" herein means an organic group in which all the hydrogen atoms bonded to any carbon atom are replaced by fluorine atoms. The perfluoroorganic group may contain ether oxygen.

Examples of the perfluorovinyl ether include a perfluoro(alkyl vinyl ether) (PAVE) represented by the formula (A) in which Rf is a C1-C10 perfluoroalkyl group. The perfluoroalkyl group preferably contains 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include those represented by the formula (A) in which Rf is a C4-C9 perfluoro(alkoxyalkyl) group, those represented by the formula (A) in which Rf is a group represented by the following formula: 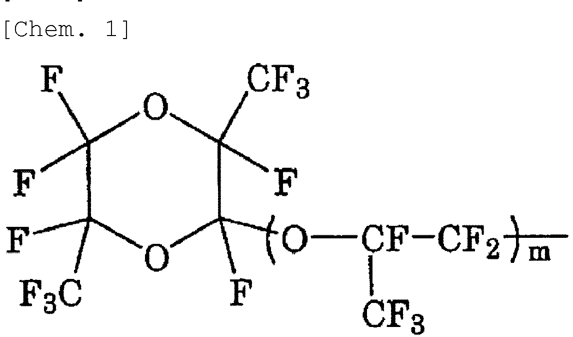 (wherein m is 0 or an integer of 1 to 4), and those represented by the formula (A) in which Rf is a group represented by the following formula: 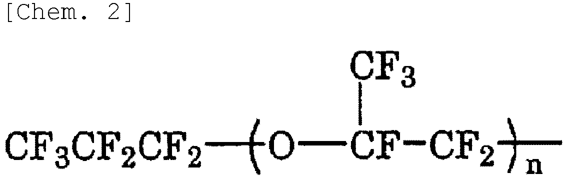 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The modifying monomer preferably includes at least one selected from the group consisting of PAVE and HFP, more preferably includes at least one selected from the group consisting of perfluoro(methyl vinyl ether) (PMVE) and HFP.

Preferably, the PTFE has one or more endothermic peaks within a temperature range from 325°C to 347°C on a heat-of-fusion curve with a temperature-increasing rate of 10°C/min using a differential scanning calorimeter (DSC) and has a heat of fusion of 62 mJ/mg or higher at 290°C to 350°C calculated from the heat-of-fusion curve.

The PTFE can be produced by emulsion polymerization or suspension polymerization, for example. The PTFE fine powder can be produced by emulsion polymerization, for example. The PTFE molding powder can be produced by suspension polymerization, for example.

The emulsion polymerization can be performed by a known method. For example, an aqueous dispersion containing particles (primary particles) of the PTFE is obtainable by emulsion polymerization of monomers to form the PTFE in an aqueous medium in the presence of a fluorine-containing anionic surfactant and a polymerization initiator. In the emulsion polymerization, additives such as a chain transfer agent, a buffer, a pH adjuster, a stabilization aid, a dispersion stabilizer, and a radical scavenger may be used as appropriate.

The suspension polymerization can be performed by a known method. For example, particles of the PTFE are obtainable by polymerization of monomers to form the PTFE in the presence of water and a polymerization initiator. In the suspension polymerization, additives such as a chain transfer agent, a buffer, a pH adjuster, a stabilization aid, a dispersion stabilizer, and a radical scavenger may be used as appropriate.

Examples of the ionizing radiation to be applied to the PTFE powder include, but are not limited to, electron beams, ultraviolet rays, gamma rays, X-rays, neutron beams, and high energy ions. Electron beams or gamma rays are preferred.

The ionizing radiation preferably has an exposure dose of 1 to 2500 kGy, more preferably 1000 kGy or lower, still more preferably 750 kGy or lower, while more preferably 10 kGy or higher, still more preferably 100 kGy or higher.

The irradiation temperature of the ionizing radiation may be any temperature that is 5°C or higher and the melting point of PTFE or lower. Molecular chains of PTFE are known to crosslink around the melting point thereof. Thus, to provide low molecular weight PTFE, the irradiation temperature is preferably 320°C or lower, more preferably 300°C or lower, still more preferably 260°C or lower. From an economic viewpoint, the irradiation is preferably performed at room temperature.

The irradiation with ionizing radiation may be performed in any atmosphere, such as in the air, inert gas, or vacuum. To reduce the cost, the irradiation is preferably performed in the air.

In the production method of the disclosure, a PTFE micropowder having an average particle size of 20 um or smaller is obtainable through a step of irradiating the PTFE powder with ionizing radiation.

The PTFE micropowder may be obtainable, for example, by pulverizing the PTFE powder irradiated with ionizing radiation.

The pulverization may be performed by any method, such as pulverization using a pulverizer. Examples of the pulverizer include impact-type pulverizers such as a planetary mill, a hammer mill, a pin mill, and a jet mill, and grinding-type pulverizers utilizing shearing force generated by unevenness between a rotary blade and a peripheral stator, such as a cutter mill.

The pulverization temperature is preferably not lower than -200°C but lower than 50°C. The pulverization may be performed at a temperature around room temperature (10°C to 30°C), or may be freeze pulverization at -200°C to -100°C.

The pulverization may be followed by removal of fine particles and fibrous particles by air classification, and further followed by removal of coarse particles by classification.

The average particle size of the PTFE micropowder is 20 um or smaller, preferably 15 um or smaller, more preferably 10 um or smaller, while preferably 1 um or greater.

The average particle size is regarded as being equivalent to the particle size corresponding to 50% of the cumulative volume in the particle size distribution determined using a laser diffraction particle size distribution analyzer (HELOS & RODOS) available from Jeol Ltd.

The PTFE micropowder has a melt viscosity at 380°C of preferably 1 × 10¹ Pa·s or higher, more preferably 5 × 10² Pa·s or higher, while preferably 7 × 10⁵ Pa·s or lower, more preferably 2 × 10⁵ Pa·s or lower, still more preferably 1 × 10⁵ Pa·s or lower.

The melt viscosity is a value determined by heating a 2-g sample at 380°C for five minutes in advance and then keeping this sample at this temperature under a load of 0.7 MPa using an elevated flow tester (Shimadzu Corp.) and a 2φ-8L die in conformity with ASTM D1238.

### <First PTFE powder of the disclosure>

The first PTFE powder of the disclosure has an apparent density of 0.40 g/ml or lower and an average particle size of 700 um or greater.

The first PTFE powder of the disclosure can suitably be used as the PTFE powder in the production method of the disclosure, i.e., can suitably be used as a material of the PTFE micropowder. Preferred embodiments of the PTFE powder described with regard to the production method of the disclosure are also applicable to the first PTFE powder of the disclosure.

### <Second PTFE powder of the disclosure>

The second PTFE powder of the disclosure has an average particle size of 700 um or greater and includes 3% by weight or less of a 42 mesh or smaller fine powder.

The second PTFE powder of the disclosure can suitably be used as the PTFE powder in the production method of the disclosure, i.e., can suitably be used as a material of the PTFE micropowder. Preferred embodiments of the PTFE powder described with regard to the production method of the disclosure are also applicable to the second PTFE powder of the disclosure.

### <Third PTFE powder of the disclosure>

The third PTFE powder of the disclosure has an average particle size of 700 um or greater, which is to be used as a material of a PTFE micropowder.

The PTFE micropowder is similar to the PTFE micropowder in the production method of the disclosure and preferred embodiments of the former are similar to those of the latter.

The third PTFE powder of the disclosure can suitably be used as the PTFE powder in the production method of the disclosure. Preferred embodiments of the PTFE powder described with regard to the production method of the disclosure are also applicable to the third PTFE powder of the disclosure.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### Apparent density of PTFE powder

The apparent density was determined in conformity with JIS K6892.

### Average particle size of PTFE powder and PTFE micropowder

First, 10, 20, 32, 48, 60, and 83 mesh (mesh per inch) standard sieves were stacked in the stated order from top to bottom. PTFE powder was fed onto the 10 mesh sieve and the sieves were vibrated so that finer particles of the PTFE powder dropped successively to the lower sieves. The proportions of the PTFE powder residues on the respective sieves were determined in percentage. On lognormal probability paper, the cumulative percentages of the remaining proportions (vertical axis) were marked relative to the openings of the sieves (horizontal axis). These points were connected by straight lines and the particle size corresponding to the proportion of 50% on these straight lines was determined. This value was defined as the average particle size of the PTFE powder.

The average particle size of the PTFE micropowder was regarded as being equivalent to the particle size corresponding to 50% of the cumulative volume in the particle size distribution determined using a laser diffraction particle size distribution analyzer (HELOS & RODOS) available from Jeol Ltd.

### Proportion of fine powder in PTFE powder

The PTFE powder was sieved with a 48 mesh (mesh per inch) sieve, and the mesh-under proportion (proportion of powder passed through the sieve to the whole amount of the PTFE powder) was determined (48 mesh pass).

### Rise sensory test on PTFE fine powder

The PTFE powder was scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison was visually performed by three persons and was numerically expressed (indexed) (rise sensory index) in the following manner:
1: Clearly no powder rise is observed (a state in which no powdery PTFE powder particles are visually observed above a top surface (a portion at a height of 32 cm) of the 18-L plastic container (32 cm tall) within five seconds immediately after completion of the dropping of the PTFE powder into the plastic container);
2: Powder rise occurs but in a slight amount (a state in which powdery PTFE powder particles are visually observed above a top surface (a portion at a height of 32 cm) of the 18-L plastic container (32 cm tall) within five seconds immediately after completion of the dropping of the PTFE powder into the plastic container, but in a slight amount such that the rising powder is not visually observed in five seconds);
3: Powder rise occurs and powder is possibly to adhere to clothes of worker
   (a state in which powdery PTFE powder particles are visually observed about 5 cm above a top surface (a portion at a height of 32 cm) of the 18-L plastic container (32 cm tall) within five seconds immediately after completion of the dropping of the PTFE powder into the plastic container, and in which slight deposition of fine powder of the PTFE powder is observed on a floor where the plastic is placed; the PTFE powder is possibly to adhere to clothes or shoes of a worker; still, the deposition is in a slight amount that is difficult to quantify);
4: Clearly powder rise is observed
   (a state in which powdery PTFE powder particles are visually observed about 10 cm above a top surface (a portion at a height of 32 cm) of the 18-L plastic container (32 cm tall) within five seconds immediately after completion of the dropping of the PTFE powder into the plastic container).

### Melt viscosity of PTFE micropowder

The melt viscosity is a value determined by heating a 2-g sample at 380°C for five minutes in advance and then keeping this sample at this temperature under a load of 0.7 MPa using an elevated flow tester (Shimadzu Corp.) and a 2φ-8L die in conformity with ASTM D1238.

### Examples 1 to 11 (Table 1)

Commercially available homo-PTFE fine powder (standard specific gravity: 2.175) was sieved using a 10 mesh (opening 1.7 mm) sieve. The mesh-up proportion (proportion of the residue on the sieve to the whole amount of the PTFE fine powder) in this sieving is shown in Table 1.

In Examples 1 to 8, the mesh-up product (residue on the sieve) was irradiated with cobalt-60 γ-rays in the air at room temperature under the conditions shown in Table 1. Thereby, a low molecular weight PTFE powder was obtained.

In Examples 9 to 11, the mesh-up product (residue on the sieve) was mixed as appropriate with the mesh-under product (product passed through the sieve) and this mixture was irradiated with cobalt-60 γ-rays in the air at room temperature under the conditions shown in Table 1.

Thereby, a low molecular weight PTFE powder was obtained.

Each low molecular weight PTFE powder was pulverized at room temperature in the dry mode using a Jiyu Mill (Mill) available from Nara Machinery Co., Ltd., whereby a PTFE micropowder was obtained.

### Comparative Examples 1 to 8 (Table 2)

A PTFE micropowder was obtained in the same manner as in Examples 1 to 8 except that the mesh-under product (product passed through the sieve) was used instead of the mesh-up product.

The mesh-under product was sieved using a 10 mesh (opening 1.7 mm) sieve before use to confirm that no residue was found on the sieve (the mesh-up proportion was 0 wt%).

**[Table 1]**

| Mesh-up product | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| PTFE fine powder | | | | | | | | | | | | | |
| | Mesh-up proportion | wt% | 1.9 | ← | ← | ← | 2.1 | ← | 1.7 | 2.6 | 1.9 | ← | ← |
| | Apparent density | g/ml | 0.39 | ← | ← | ← | 0.37 | ← | 0.38 | 0.38 | 0.39 | ← | ← |
| | Average particle size | µm | 1276 | ← | ← | ← | 1328 | ← | 940 | 1532 | 1274 | 1271 | 1265 |
| | 48 Mesh pass | wt% | 0.2 | ← | ← | ← | 0.15 | ← | 0.2 | 0.1 | 0.5 | 1 | 2.1 |
| | Powder rise | Sensory test | 1 | ← | ← | **←** | 1 | ← | 2 | 1 | 1 | 1 | 2 |
| PTFE micropowder | Exposure dose applied | kGy | 100 | 150 | 200 | 500 | 150 | 500 | 200 | 200 | 100 | 150 | 200 |
| | Average particle size | µm | 8 | 6 | 4 | 2 | 6 | 2 | 3 | 3 | 8 | 6 | 4 |
| | Melt viscosity | Pa·s | 108,000 | 30,000 | 19,000 | 3,000 | 40,000 | 3,500 | 21,000 | 20,000 | 108,000 | 30,000 | 19,000 |

| Mesh-under product | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| PTFE fine powder | | | | | | | | | | |
| | Mesh-up proportion | wt% | 0 | ← | ← | ← | 0 | ← | 0 | 0 |
| | Apparent density | g/ml | 0.45 | ← | ← | ← | 0.43 | ← | 0.41 | 0.46 |
| | Average particle size | µm | 520 | ← | ← | ← | 550 | ← | 530 | 480 |
| | 48 Mesh pass | wt% | 10 | ← | ← | ← | 4.2 | ← | 12.4 | 14.2 |
| | Powder rise | Sensory test | 3 | ← | ← | ← | 3 | ← | 4 | 3 |
| PTFE micropowder | Exposure dose applied | kGy | 100 | 150 | 200 | 500 | 150 | 500 | 200 | 200 |
| | Average particle size | µm | 8 | 6 | 4 | 2 | 6 | 2 | 3 | 3 |
| | Melt viscosity | Pa·s | 99,000 | 29,000 | 19,000 | 2,800 | 38,000 | 3,600 | 22,000 | 19,000 |

## Claims

1. A method for producing a polytetrafluoroethylene micropowder, the method comprising:
irradiating a polytetrafluoroethylene powder having an average particle size of 700 um or greater with ionizing radiation to provide a polytetrafluoroethylene micropowder having an average particle size of 20 um or smaller.

2. The method for producing a polytetrafluoroethylene micropowder according to claim 1,
wherein the polytetrafluoroethylene micropowder has a melt viscosity at 380°C of 1 × 10¹ to 7 × 10⁵ Pa-s.

3. The method for producing a polytetrafluoroethylene micropowder according to claim 1 or 2,
wherein the polytetrafluoroethylene powder has an apparent density of 0.40 g/ml or lower.

4. The method for producing a polytetrafluoroethylene micropowder according to any one of claims 1 to 3,
wherein the polytetrafluoroethylene powder is obtained by sieving with a sieve having an opening of 700 um to 2 mm.

5. The method for producing a polytetrafluoroethylene micropowder according to any one of claims 1 to 4,
wherein the polytetrafluoroethylene powder has a rise sensory index of 2 or lower, where the rise sensory index is determined in a rise sensory test performed under the following conditions:
(rise sensory test)
the polytetrafluoroethylene powder is scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison is visually performed by three persons and is indexed (rise sensory index) in the following manner:
1: Clearly no powder rise is observed
(a state in which no powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container);
2: Powder rise occurs but in a slight amount
(a state in which powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container, but in a slight amount such that the rising powder is not visually observed in five seconds);
3: Powder rise occurs and powder is possibly to adhere to clothes of worker
(a state in which powdery polytetrafluoroethylene powder particles are visually observed about 5 cm above a top surface (a portion at a height of 32 cm) of the 18-L plastic container (32 cm tall) within five seconds immediately after completion of the dropping of the polytetrafluoroethylene powder into the plastic container, and in which slight deposition of fine powder of the polytetrafluoroethylene powder is observed on a floor where the plastic is placed; the polytetrafluoroethylene powder is possibly to adhere to clothes or shoes of a worker; still, the deposition is in a slight amount that is difficult to quantify);
4: Clearly powder rise is observed
(a state in which powdery polytetrafluoroethylene powder particles are visually observed about 10 cm above a top surface (a portion at a height of 32 cm) of the 18-L plastic container (32 cm tall) within five seconds immediately after completion of the dropping of the polytetrafluoroethylene powder into the plastic container).

6. A polytetrafluoroethylene powder having an apparent density of 0.40 g/ml or lower and an average particle size of 700 um or greater.

7. The polytetrafluoroethylene powder according to claim 6,
wherein the polytetrafluoroethylene powder has a rise sensory index of 2 or lower, where the rise sensory index is determined in a rise sensory test performed under the following conditions:
(rise sensory test)
the polytetrafluoroethylene powder is scooped with a stainless steel measuring scoop having a width of 133 mm, a length of 205 mm, and a depth of 70 mm and dropped from a height of 1.2 mm into a 18-L plastic container, followed by comparison of an amount of rising powder generated; this comparison is visually performed by three persons and is indexed (rise sensory index) in the following manner:
1: Clearly no powder rise is observed
(a state in which no powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container);
2: Powder rise occurs but in a slight amount
(a state in which powdery polytetrafluoroethylene powder particles are visually observed above a top surface (a portion at a height of 32 cm) of the 18-L plastic container (32 cm tall) within five seconds immediately after completion of the dropping of the polytetrafluoroethylene powder into the plastic container, but in a slight amount such that the rising powder is not visually observed in five seconds);
3: Powder rise occurs and powder is possibly to adhere to clothes of worker
(a state in which powdery polytetrafluoroethylene powder particles are visually observed about 5 cm above a top surface (a portion at a height of 32 cm) of the 18-L plastic container (32 cm tall) within five seconds immediately after completion of the dropping of the polytetrafluoroethylene powder into the plastic container, and in which slight deposition of fine powder of the polytetrafluoroethylene powder is observed on a floor where the plastic is placed; the polytetrafluoroethylene powder is possibly to adhere to clothes or shoes of a worker; still, the deposition is in a slight amount that is difficult to quantify);
4: Clearly powder rise is observed
(a state in which powdery polytetrafluoroethylene powder particles are visually observed about 10 cm above a top surface (a portion at a height of 32 cm) of the 18-L plastic container (32 cm tall) within five seconds immediately after completion of the dropping of the polytetrafluoroethylene powder into the plastic container).

8. A polytetrafluoroethylene powder having an average particle size of 700 um or greater and including 3% by weight or less of a 42 mesh or smaller fine powder.

9. The polytetrafluoroethylene powder according to claim 8,
wherein the polytetrafluoroethylene powder has an apparent density of 0.40 g/ml or lower.

10. The polytetrafluoroethylene powder according to claim 8 or 9, which is a polytetrafluoroethylene fine powder.

11. A polytetrafluoroethylene powder having an average particle size of 700 um or greater, which is to be used as a material of a polytetrafluoroethylene micropowder.
